(19) Europäisches Patentamt
European Patent Office
Office européen des brevets

(11) **EP 3 321 713 A1**

## (12) EUROPEAN PATENT APPLICATION
published in accordance with Art. 153(4) EPC

(43) Date of publication:
**16.05.2018 Bulletin 2018/20**

(21) Application number: **15897800.7**

(22) Date of filing: **12.11.2015**

(51) Int Cl.:
*G01S 7/521* (2006.01)   *G01B 11/00* (2006.01)

(86) International application number:
**PCT/KR2015/012165**

(87) International publication number:
**WO 2017/007078 (12.01.2017 Gazette 2017/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.07.2015 KR 20150096229**
**22.10.2015 KR 20150147046**

(71) Applicant: **Shin, Ung Chul**
**Seoul 02216 (KR)**

(72) Inventor: **Shin, Ung Chul**
**Seoul 02216 (KR)**

(74) Representative: **Zardi, Marco**
**M. Zardi & Co. SA**
**Via Pioda 6**
**6900 Lugano (CH)**

## (54) LASER RANGE FINDER

(57) The present invention relates to a LASER RANGE FINDER, and more particularly, to a LASER RANGE FINDER which includes a first laser transmitting unit and a second laser transmitting unit transmitting a laser in different directions and controls angles of a first module and a second module including the first laser transmitting unit and the second laser transmitting unit, respectively to effectively measure a distance between a first specific object and a second specific object and further, easily measure the length of a specific object.

[Figure 1]

**Description**

[Technical Field]

This application claims priority to and the benefit of Korean Patent Application Nos. 10-2015-0096229 and 10-2015-0147046 filed on July 07, 2015 and October 22, 2015, the entire contents of which are incorporated herein by reference.

The present invention relates to a LASER RANGE FINDER, and more particularly, to a LASER RANGE FINDER which includes a first laser transmitting unit and a second laser transmitting unit transmitting a laser in different directions and controls angles of a first module and a second module including the first laser transmitting unit and the second laser transmitting unit, respectively to effectively measure a distance between a first specific object and a second specific object and further, easily measure the length of a specific object.

[Background Art]

In general, a tapeline is generally used for measuring a distance in a whole industry such as an industrial site, a construction site, and an indoor interior or a daily life.

By using the tapeline, in an object or a place having a large volume or an object or a place having a large size, it is difficult for a single person to measure the distance, and as a result, two persons are required and since the tapeline is easily bent due to a characteristic of a material of the tapeline, the tapeline is bent while being measured and it is difficult to accurately measure the distance and in particular, the measured distance needs to be particularly linearly connected.

Therefore, a laser range finder (LRF) is developed, which calculates a distance from a target by counting a time until a laser beam is reflected and returned on the target by using the laser beam and thereafter, measures the distance up to the target.

The LASER RANGE FINDER is a device that includes a laser transmitting unit transmitting laser light and a laser receiving unit receiving the laser light which is reflected and returned on the target and measures the time for which the transmitted laser light is reflected and returned on the target when a user transmits the laser light to the target to which the user intends to measure the distance, and thereafter, calculates and displays the distance from the time.

Since the LASER RANGE FINDER measures the distance by emitting the laser beam and receiving the laser beam reflected on the target, the laser beam needs to be accurately received.

However, the LASER RANGE FINDER may be used only for measuring a horizontal distance or a vertical distance. Further, there is inconvenience that the target needs to exist on a horizontal or vertical extension line and significant inconvenience or impossibility in measuring a predetermined distance of a measurement plane.

[Detailed Description of the Invention]

[Technical Problem]

An object of the present invention is to provide a LASER RANGE FINDER in which a first laser transmitting unit and a second laser transmitting unit are configured to transmit a laser in opposite directions, respectively to accurately measure a distance between a first specific object and a second specific object even though a user measures a distance at any position if the user transmits the laser to the first specific object and the second specific object at the time of measuring the distance between the first specific object and the second specific object.

Further, another object of the present invention is to provide a LASER RANGE FINDER which enables an angle of the LASER RANGE FINDER to be controlled to easily measure the length of a specific object without a reflection plate.

[Technical Solution]

According to an embodiment of the present invention, a LASER RANGE FINDER may include: a first laser transmitting unit and a second laser transmitting unit transmitting lasers; a first laser receiving unit and a second laser receiving unit receiving the lasers transmitted from the first laser transmitting unit and the second laser transmitting unit, respectively and reflected on a specific object; and a calculation unit calculating distances between the first laser transmitting unit and the second laser transmitting unit, and the specific object. The first laser transmitting unit and the second laser transmitting unit may transmit the lasers in different directions.

The first laser transmitting unit and the second laser transmitting unit may transmit the lasers in opposite directions to each other.

The calculation unit may calculate the distance between each of the first laser transmitting unit and the second laser transmitting unit, and the specific object based on a laser transmission time and a laser reception time.

The calculation unit may calculate the sum of the distance between the first laser transmitting unit and the specific object and the distance between the second laser transmitting unit and the specific object.

The LASER RANGE FINDER may further include: a first module including the first laser transmitting unit and the first laser receiving unit; and a second module including the second laser transmitting unit and the second laser receiving unit.

The first module and the second module may be initially positioned to face opposite directions to each other.

Each of the first module and the second module may be configured to control an angle.

Each of the first module and the second module may be configured to be detachable.

The LASER RANGE FINDER may further include: an angle measuring unit measuring an angle between the first module and the second module.

The calculation unit may calculate the length of the specific object itself by using a distance with which the laser transmitted from each of the first laser transmitting unit and the second laser transmitting unit is reflected on the specific object and the angle measured by the angle measuring unit.

The LASER RANGE FINDER may further include: a display unit displaying at least one of the distances between the first laser transmitting unit and the second laser transmitting unit, and the specific object and the length of the specific object itself calculated by the calculation unit.

The first module and the second module may be hinge-coupled.

The LASER RANGE FINDER may further include: a time measuring unit measuring a time when the lasers are transmitted by the first laser transmitting unit and the second laser transmitting unit and a time when the lasers are received by the first laser receiving unit and the second laser receiving unit.

The LASER RANGE FINDER may further include: one or more operation buttons indicating the laser to be transmitted.

[Advantageous Effects]

According to one aspect of the present invention, as a first laser transmitting unit and a second laser transmitting unit transmit lasers in opposite directions, respectively to accurately measure a distance between a first specific object and a second specific object even though a user measures a distance at any position if the user transmits the laser to the first specific object and the second specific object at the time of measuring the distance between the first specific object and the second specific object.

Further, as an angle of the LASER RANGE FINDER is enabled to be controlled, the length of a specific object can be easily measured without a reflection plate and the distance or angle can be measured even at an edge, a slot, or a corner.

Moreover, a horizontal length, a vertical length, and a height of a quadrangle are measured by the LASER RANGE FINDER to measure even an area of the quadrangle.

[Brief Description of Drawings]

FIG. 1 is a configuration diagram illustrating a LASER RANGE FINDER according to an embodiment of the present invention.

FIG. 2 is a schematic view of a method for measuring a distance between objects by using a LASER RANGE FINDER according to an embodiment of the present invention.

FIG. 3 is a schematic view of a method for measuring the length of an object by using a LASER RANGE FINDER according to another embodiment of the present invention.

FIG. 4 is a schematic view of a calculation method for measuring the length of an object by using a LASER RANGE FINDER according to another embodiment of the present invention.

[Best Mode]

The present invention will be described below in detail with reference to the accompanying drawings. Herein, a repeated descriptiona detailed description of a known function and a known constitution which may unnecessarily obscure the spirit of the present invention will be skipped. The embodiment of the present invention is provided to more completely describe the present invention to those skilled in the art. Accordingly, the shape, the size, etc., of elements in the figures may be exaggerated for more explicit comprehension.

Throughout the specification, unless explicitly described to the contrary, the word "comprise" and variations such as "comprises" or "comprising", will be understood to imply the inclusion of stated elements but not the exclusion of any other elements.

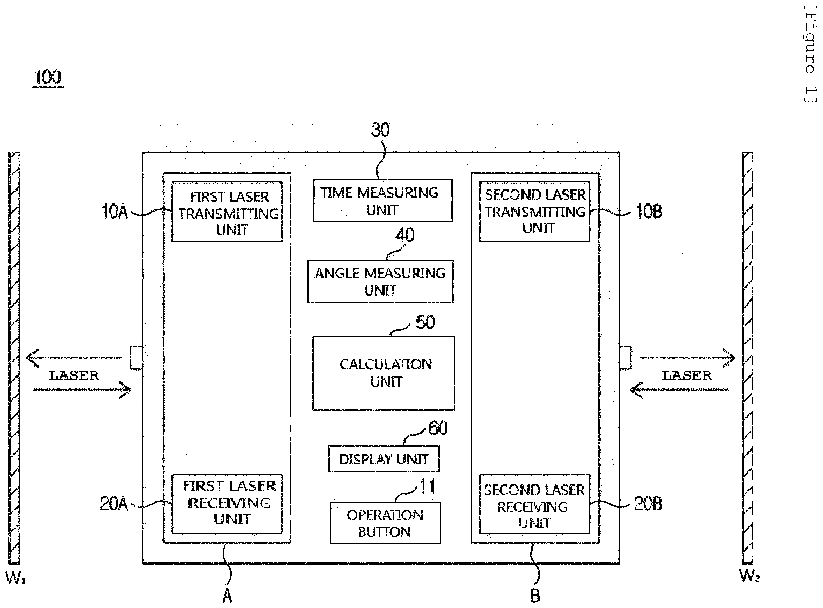

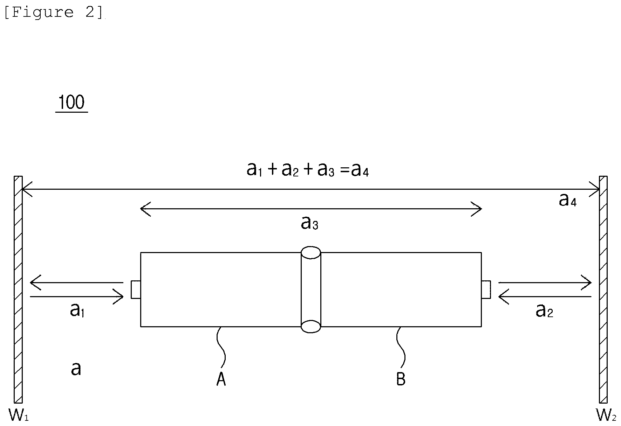

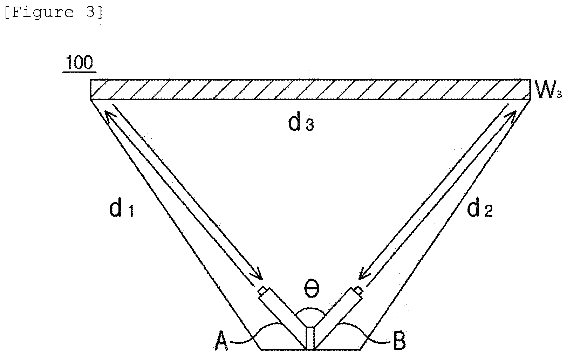

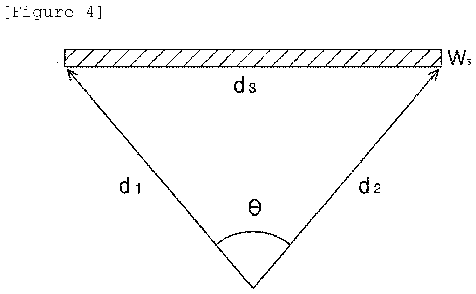

FIG. 1 is a configuration diagram illustrating a LASER RANGE FINDER according to an embodiment of the present invention, FIG. 2 is a schematic view of a method for measuring a distance between objects by using a LASER RANGE FINDER, FIG. 3 is a schematic view of a method for measuring the length of an object by using a LASER RANGE FINDER according to another embodiment of the present invention, and FIG. 4 is a schematic view of a calculation method for measuring the length of an object by using a

LASER RANGE FINDER.

As illustrated in FIG. 1, the LASER RANGE FINDER 100 according to the present invention may be configured to include a first laser transmitting unit 10A, a second laser transmitting unit 10B, a first laser receiving unit 20A, a second laser receiving unit 20B, a first module A, a second module B, a time measuring unit 30, an angle measuring unit 40, a calculation unit 50, and a display unit 60.

First, the first laser transmitting unit 10A and the second laser transmitting unit 10B may serve to transmit a laser. In this case, the first laser transmitting unit 10A and the second laser transmitting unit 10B may transmit the laser in different directions, for example, opposite directions.

When the embodiment of the present invention is described with reference to FIGS. 1 and 2, when a first specific object $W_1$ is positioned at one side and a second specific object $W_2$ is positioned at the other side from a user, and the user intends to measure a distance between the first specific object $W_1$ and the second specific object $W_2$, the user may allow the first laser transmitting unit 10A and the second laser transmitting unit 10B to transmit the laser to the first specific object $W_1$ and the second specific object $W_2$, respectively by using one or more operation buttons 11 indicating each of the first laser transmitting unit 10A and the second laser transmitting unit 10B to transmit the laser.

In this case, even though the user is positioned relatively inclined to the first specific object $W_1$ or the second specific object $W_2$, the user may measure the distance between the first specific object $W_1$ or the second specific object $W_2$ regardless of the relatively inclined positioning.

In the case of the LASER RANGE FINDER, when the user intends to measure the distance between the first specific object $W_1$ and the second specific object $W_2$, the LASER RANGE FINDER operates in the first specific object $W_1$ and the laser is transmitted toward the second specific object $W_2$ to measure the distance between the first specific object $W_1$ and the second specific object $W_2$. In other words, the user needs to be particularly positioned at a start point of the measured distance.

However, in the LASER RANGE FINDER 100 according to the embodiment of the present invention, since the first laser transmitting unit 10A and the second laser transmitting unit 10B transmit the laser in the different directions, the user may easily measure the distance even though the user is measured at any position if the user transmits the laser to the first specific object $W_1$ and the second specific object $W_2$. That is, there may not be limit in the position of the user if the user transmits the laser to the first specific object $W_1$ and the second specific object $W_2$.

A method for measuring the distance between the first specific object $W_1$ and the second specific object $W_2$ by using the LASER RANGE FINDER 100 will be described below in more detail.

Subsequently, the first laser receiving unit 20A and the second laser receiving unit 20B serve to receive the lasers which are transmitted from the first laser transmitting unit 10A and the second laser receiving unit 10B, respectively and thereafter, reflected and returned on a specific object.

As presented above, when the first specific object $W_1$ is positioned to one side and the second specific object $W_2$ is positioned to the other side from the user, and the user presses one or more operation buttons 11, the laser may be transmitted toward the first specific object $W_1$ from the first laser transmitting unit 10A and the laser may be reflected on the first specific object $W_1$ and received by the first laser receiving unit 20A. Similarly thereto, the laser transmitted toward the second specific object $W_2$ from the second laser transmitting unit 10B may be reflected on the second specific object $W_2$ and received by the second laser receiving unit 20B.

It should be noted that in the LASER RANGE FINDER 100, a first module A including the first laser transmitting unit 10A and the first laser receiving unit 20A and a second module B including the second laser transmitting unit 10B and the second laser receiving unit 20B may be divisionally configured or the first laser transmitting unit 10A, the second laser transmitting unit 10B, the first laser receiving unit 20A, and the second laser receiving unit 20B may be configured as one module.

The first module A and the second module B may be detachable and initially positioned to face opposite directions to each other. Further, the first module A and the second module B may be configured to control the angles, respectively, through hinge coupling.

As such, as the first module A and the second module B may control the angles thereof, the distance between the first specific object and the second specific object and the length of a third specific object itself ($W_3$ of FIG. 3) may be measured. This will be described in more detail with reference to FIGS. 3 and 4 to be described below.

The time measuring unit 30 may serve to measure a laser transmission time and a laser reception time.

Due to the time measuring unit 30, the laser transmission time and the laser reception time may be measured and thereafter, the distance between the first specific object $W_1$ and the second specific object $W_2$ and the length of the third specific object $W_3$ (of FIG. 3) may be measured based on the laser transmission time and the laser reception time.

The angle measuring unit 40 may serve to measure an angle between the first module A and the second module B.

Due to the angle measuring unit 40, the angle between the first module A and the second module B may be measured and further, the distance between the first laser transmitting unit 10A and the third specific object $W_3$ (of FIG. 3) and the distance between the second laser transmitting unit 10B and the third specific object $W_3$ (of FIG. 3) are measured to easily measure the length of the third specific object $W_3$ (of FIG. 3).

The calculation unit 50 may serve to calculate the distance between each of the first laser transmitting unit 10A and the second laser transmitting unit 10B, and the specific object based on the laser transmission time and the laser reception time measured by the time measuring unit 30.

As the embodiment of the present invention, when the first specific object $W_1$ is positioned to one side and the second specific object $W_2$ is positioned to the other side from the user, and the user presses one or more operation buttons 11, the laser may be transmitted toward the first specific object $W_1$ from the first laser transmitting unit 10A and the laser may be reflected on the first specific object $W_1$ and received by the first laser receiving unit 20A. Similarly thereto, the laser transmitted toward the second specific object $W_2$ from the second laser transmitting unit 10B may be reflected on the second specific object $W_2$ and received by the second laser receiving unit 20B.

In this case, the time measuring unit 30 may measure the laser transmission time and the laser reception time, and the calculation unit 50 may calculate each of the distance between the first laser transmitting unit 10A and the first specific object $W_1$ and the distance between the second laser transmitting unit 10B and the second specific object $W_2$ based on the laser transmission time by the first and second laser transmitting units 10A and 10B and the laser reception time by the first and second laser receiving units 20A and 20B.

That is, the calculation unit 50 may measure the distance between the first specific object $W_1$ and the second specific object $W_2$ by summing up the distance between the first laser transmitting unit 10A and the first specific object $W_1$ and the distance between the second laser transmitting unit 10B and the second specific object $W_2$.

In more detail, when the distance between the first laser transmitting unit 10A and the first specific object $W_1$ is represented by $a_1$, the distance between the second laser transmitting unit 10B and the second specific object $W_2$ is represented by $a_2$, the length of the LASER RANGE FINDER 100 is represented by $a_3$, and the distance between the first specific object $W_1$ and the second specific object $W_2$ is represented by $a_4$, the distance between the first specific object $W_1$ and the second specific object $W_2$ may be calculated as shown in <Equation 1> given below.

<Equation 1>

$$a_1 + a_2 + a_3 = a_4$$

Further, the calculation unit 50 may serve to calculate the distances up to one side and the other side of the third specific object $W_3$ from each of the first and second laser transmitting units 10A and 10B and the angle measured by the angle measuring unit 40.

Herein, when another embodiment of the present invention is described with reference to FIGS. 3 and 4, the user is positioned while viewing the third specific object $W_3$, and as the angle of each of the first module A and the second module B may be controlled, the laser may be transmitted from the first laser transmitting unit (not illustrated) included in the first module A toward one side of the third specific object $W_3$ and the laser may be reflected on one side of the third specific object $W_3$ and received by the first laser receiving unit (not illustrated) of the first module A. Similarly thereto, the laser transmitted toward the other side of the third specific object from the second laser transmitting unit included in the second module B may be reflected on the other side of the third specific object $W_3$ and received by the second laser receiving unit of the second module B.

In this case, the time measuring unit 30 of FIG. 1 may measure the laser transmission time and the laser reception time and the angle measuring unit 40 of FIG. 1 may measure the angle between the first module A and the second module B.

The calculation unit 50 of FIG. 1 may measure the length of the third specific object $W_3$ itself by using the laser transmission and reception time and the angle between the first and second modules A and B.

In detail, when the distance between the first module A and one side of the third specific object $W_3$ is represented by $d_1$, the distance between the second module B and the other side of the third specific object $W_3$ is represented by

$d_2$, the length of the third specific object $W_3$ itself is represented by $d_3$, and the angle between the first module A and the second module B is represented by $\theta$, the length of the third specific object $W_3$ itself may be calculated as shown in <Equation 2> given below.

<Equation 2>

$$d_3 = \sqrt{(d_1)^2 + (d_2)^2 - 2(d_1)(d_2)cos\theta}$$

Referring back to FIGS. 1 and 2, the display unit 60 may serve to display at least one of the distance between the first specific object $W_1$ and the second specific object $W_2$ and the length of the third specific object $W_3$ (of FIG. 3) itself calculated by the calculation unit 50.

The display unit 60 may provide a visual output to the user and provide, for example, a text, an image, and graphics.

As described above, in the LASER RANGE FINDER according to the embodiment of the present invention, when the first specific object is positioned to one side and the second specific object is positioned to the other side from the user, and the user presses one or more operation buttons, the laser may be transmitted toward the first specific object from the first laser transmitting unit and the laser may be reflected on the first specific object and received by the first laser receiving unit. Similarly thereto, the laser transmitted toward the second specific object from the second laser transmitting unit may be reflected on the second specific object and received by the second laser receiving unit.

In this case, the time measuring unit may measure the laser transmission and reception time and the calculation unit may calculate the distance between the first specific object and the second specified object based on the laser transmission time by the first and second laser transmitting units and the laser reception time by the first and second laser receiving units.

As a result, even though the user measures the distance at any position without a limit in positions to transmit the laser to the first and second specific objects, the user may easily measure the distance between the first and second specific objects.

Further, in the LASER RANGE FINDER according to another embodiment of the present invention, the user is positioned while viewing the third specific object, and as the angle of each of the first module and the second module may be controlled, the laser may be transmitted from the first laser transmitting unit included in the first module toward one side of the third specific object and the laser may be reflected on one side of the third specific object and received by the first laser receiving unit of the first module. Similarly thereto, the laser transmitted toward the other side of the third specific object from the second laser transmitting unit included in the second module may be reflected on the other side of the third specific object and received by the second laser receiving unit of the second module.

In this case, the time measuring unit may measure the laser transmission and reception time, the angle measuring unit may measure the angle between the first module and the second module, and the calculation unit may measure the length of the third specific object itself based on the laser transmission and reception time and the angle between the first and second modules.

As a result, the user may easily measure the length of the third specific object itself without a separate reflection plate.

Further, the LASER RANGE FINDER according to another embodiment of the present invention measures a horizontal length, a vertical length, and a height of a quadrangle to measure even an area of the quadrangle by using the aforementioned method.

The present invention has been described with reference to the preferred embodiments. However, it will be appreciated by those skilled in the art that various modifications and changes of the present invention can be made without departing from the spirit and the scope of the present invention which are defined in the appended claims and their equivalents.

**Claims**

1. A LASER RANGE FINDER comprising:

   a first laser transmitting unit and a second laser transmitting unit transmitting lasers;
   a first laser receiving unit and a second laser receiving unit receiving the lasers transmitted from the first laser transmitting unit and the second laser transmitting unit, respectively and reflected on a specific object; and
a calculation unit calculating distances between the first laser transmitting unit and the second laser transmitting unit, and the specific object,
wherein the first laser transmitting unit and the second laser transmitting unit transmit the lasers in different directions.

2. The LASER RANGE FINDER of claim 1, wherein the first laser transmitting unit and the second laser transmitting unit transmit the lasers in opposite directions to each other.

3. The LASER RANGE FINDER of claim 1, wherein the calculation unit calculates the distance between each of the first laser transmitting unit and the second laser transmitting unit, and the specific object based on a laser transmission time and a laser reception time.

4. The LASER RANGE FINDER of claim 1, wherein the calculation unit calculates the sum of the distance between the first laser transmitting unit and the specific object and the distance between the second laser transmitting unit and the specific object.

5. The LASER RANGE FINDER of claim 1, further comprising:

   a first module including the first laser transmitting unit and the first laser receiving unit; and
   a second module including the second laser transmitting unit and the second laser receiving unit.

6. The LASER RANGE FINDER of claim 5, wherein the first module and the second module are initially positioned to face opposite directions to each other.

7. The LASER RANGE FINDER of claim 6, wherein each of the first module and the second module is configured to control an angle.

8. The LASER RANGE FINDER of claim 5, wherein each of the first module and the second module is configured to be detachable.

9. The LASER RANGE FINDER of claim 5, further comprising:
   an angle measuring unit measuring an angle between the first module and the second module.

10. The LASER RANGE FINDER of claim 9, wherein the calculation unit calculates the length of the specific object itself by using a distance with which the laser transmitted from each of the first laser transmitting unit and the second laser transmitting unit is reflected on the specific object and the angle measured by the angle measuring unit.

11. The LASER RANGE FINDER of claim 10, further comprising:
    a display unit displaying at least one of the distances between the first laser transmitting unit and the second laser transmitting unit, and the specific object and the length of the specific object itself calculated by the calculation unit.

12. The LASER RANGE FINDER of claim 5, wherein the first module and the second module are hinge-coupled.

13. The LASER RANGE FINDER of claim 1, further comprising:
    a time measuring unit measuring a time when the lasers are transmitted by the first laser transmitting unit and the second laser transmitting unit and a time when the lasers are received by the first laser receiving unit and the second laser receiving unit.

14. The LASER RANGE FINDER of claim 1, further comprising:
    one or more operation buttons indicating the laser to be transmitted.

[Figure 1]

[Figure 2]

<u>100</u>

$$a_1 + a_2 + a_3 = a_4$$

$a_4$

$a_3$

$a_1$

$a_2$

a

A

B

$W_1$

$W_2$

[Figure 3]

[Figure 4]

## INTERNATIONAL SEARCH REPORT

| International application No. |
| --- |
| **PCT/KR2015/012165** |

**A. CLASSIFICATION OF SUBJECT MATTER**

*G01S 7/521(2006.01)i, G01B 11/00(2006.01)i*

According to International Patent Classification (IPC) or to both national classification and IPC

**B. FIELDS SEARCHED**

Minimum documentation searched (classification system followed by classification symbols)

G01S 7/521; G01S 17/93; G01N 21/84; G01S 17/42; F02F 1/00; G01B 11/14; G01S 17/87; G01C 3/02; G01C 15/00; G01S 17/06; G01B 11/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: laser, distance, measurement, reflectance, angle

**C. DOCUMENTS CONSIDERED TO BE RELEVANT**

| Category* | Citation of document, with indication, where appropriate, of the relevant passages | Relevant to claim No. |
| --- | --- | --- |
| X | JP 2014-021039 A (REXXAM CO., LTD. et al.) 03 February 2014 See paragraphs [0010], [0024]-[0025], [0033],claim 1 and figure 2. | 1,3-5,8-14 |
| A | | 2,6-7 |
| A | JP 2014-055860 A (RICOH CO., LTD.) 27 March 2014 See abstract and claims 1-3. | 1-14 |
| A | KR 10-2011-0066712 A (LEE, Choong Goo et al.) 17 June 2011 See abstract, claims 1-2 and figure 2. | 1-14 |
| A | KR 10-1209522 B1 (ITI CO., LTD.) 07 December 2012 See paragraphs [0015]-[0027] and figures 1, 4. | 1-14 |
| A | JP 2010-285984 A (WAERTSILAE SCHWEIZ AG.) 24 December 2010 See abstract and claims 1-3. | 1-14 |

☐ Further documents are listed in the continuation of Box C.       ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 APRIL 2016 (07.04.2016) | **07 APRIL 2016 (07.04.2016)** |

| Name and mailing address of the ISA/KR | Authorized officer |
| --- | --- |
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (January 2015)

**INTERNATIONAL SEARCH REPORT**
Information on patent family members

International application No.

**PCT/KR2015/012165**

| Patent document cited in search report | Publication date | Patent family member | Publication date |
|---|---|---|---|
| JP 2014-021039 A | 03/02/2014 | NONE | |
| JP 2014-055860 A | 27/03/2014 | CN 103675831 A | 26/03/2014 |
| | | EP 2708916 A2 | 19/03/2014 |
| | | EP 2708916 A3 | 07/01/2015 |
| | | US 2014-0071428 A1 | 13/03/2014 |
| KR 10-2011-0066712 A | 17/06/2011 | KR 10-1082463 B1 | 11/11/2011 |
| KR 10-1209522 B1 | 07/12/2012 | WO 2013-002448 A1 | 03/01/2013 |
| JP 2010-285984 A | 24/12/2010 | CN 101922921 A | 22/12/2010 |
| | | DK 2261594 T3 | 18/02/2013 |
| | | EP 2261594 A1 | 15/12/2010 |
| | | EP 2261594 B1 | 14/11/2012 |
| | | KR 10-2010-0133298 A | 21/12/2010 |
| | | US 08443658 B2 | 21/05/2013 |
| | | US 2010-0313642 A1 | 16/12/2010 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150096229

- KR 1020150147046